# EUROPEAN PATENT APPLICATION

(11) **EP 4 738 907 A1**
(43) Date of publication of application: **06.05.2026**
(21) Application number: 24210454.5
(22) Date of filing: 04.11.2024
(51) Int. Cl.: H04W 12/30, H04W 8/18, H04W 8/20, H04W 12/72

(54) **PROVIDING AN EUICC WITH PROFILE DATA OF AT LEAST ONE PROFILE**

(71) Applicant: Giesecke+Devrient Mobile Security Germany GmbH, 81677 München (DE)
(72) Inventor: Williams, Divya Miriam, 81677 München (DE); Jager, Barbara, 81677 München (DE); Dietze, Claus, 81677 München (DE)
(74) Representative: Giesecke+Devrient IP

(57) **Abstract**

A method of establishing, in an eUICC, at least one profile, comprising: a) generate, in the eUICC, at least some of the profile data, referred to as on-board generated profile data (OP); **the method characterized by the steps**: c) transfer, all or part of, the on-board generated profile data (OP) from the eUICC to a verifier entity (VER); d) at the verifier entity (VER), based on the transferred on-board generated profile data (OP) and verification criteria and verification information, generate a verification result, which represents either successful verification or non-successful verification of the on-board generated profile data (OP), and send the verification result from the verifier entity (VER) to a state manager entity; e) by the state manager entity, provide an operative state of the profile in the eUICC only under a condition that the verification result represents a successful verification of the on-board generated profile data (OP), and under a condition that the verification result represents a non-successful verification of the on-board generated profile data (OP), prevent an operative state of the profile in the eUICC..

## Description

### Field of the invention

The present invention relates to providing an eUICC with profile data of at least one profile, the eUICC being designed to be hosted (which may be plugged or integrated) in a wireless network communication device, or briefly mobile device.

### Background of the invention and prior art

The world is connected via wireless communication networks, also referred to as mobile communication networks, wherein devices hosting eUICCs communicate with each other and with wireless network background servers in a secured way. The eUICCs hosted in the devices comprise at least one or several subscription profiles, or briefly profiles, including profile data like an international mobile subscriber identity, which may be embodied as IMSI, or in 5G as SUPI or NAI, and an authentication key K, and a profile number ICCID, OTA keys, and further profile data, enabling communication in the wireless communication network.

For eUICCs, several form factors are known, including plug-in SIM-card or pSIM, embedded and soldered-in eUICC in a strict sense or eSIM, and integrated iUICC or iSIM integrated into a chip of a chipset of the device hosting the eUICC. In the context of the present invention, eUICC is understood to include any form factor, including any of the listed form factors. Having an eUICC hosted in a mobile device according to the form factor of the eUICC may be realized as the eUICC being plugged-in or embedded or integrated into the mobile device.

Devices are for example known as consumer wireless network communication devices like smartphones and network-able tablet PCs, and as M2M wireless network communication devices including automotive wireless network communication devices and industrial wireless network communication devices. In the following, a device is meant to be a wireless network communication device, hosting an eUICC including one or several profiles, and constructed to communicate with other devices or network servers over a mobile communication network, herein including the eUICC for security relevant tasks like authentication and others.

The document [1] [SGP.22] GSMA SGP.22 RSP Technical Specification Version 3.0, 19th October 2022, and previous versions 2.x, describe procedures and architectures for provisioning profiles to eUlCCs hosted in consumer devices already in the field. The profile server from which profiles are downloaded to eUICCs in an SGP.22 scenario is also referred to as SM-DP+.

The documents [2] [SGP.41] GSMA SGP.41 eSIM IFPP Architecture and Requirements Version 1.0 Draft 17 and [3] [SGP.42] GSMA SGP.42 eSIM IFPP Technical Specification (unpublished at the date of filing the application) cover In-factory personalization or provisioning, which is a setup in which profiles are provisioned to an eUICC locally in a factory environment, contrary to the standard remote provisioning procedures envisaged in [1] [SGP.22], where a profile is downloaded to an eUICC from a remote profile provisioning server. The profile server from which profiles are downloaded to eUICCs in an in-factory procedure is also referred to as SM-DPf.

According to [1] [SGP.22], section 2.5 "Profile Protection and Delivery", an Operator's Profile is protected within a Profile Package prior to being downloaded to the eUICC. As further set out in sub-section 2.5.1, "Profile Package Types Overview", from generation to download, a Profile Package will take the following different formats:
- Unprotected Profile Package (UPP): Raw eUICC Profile Package TLV sequence.
- Protected Profile Package (PPP): Segmented and protected in BSP payload TLVs.
- Bound Profile Package (BPP): Prepended with session key agreement info, key replacement package, ISD-P creation and configuration info.
- Segmented Bound Profile Package (SBPP): BPP segmented into STORE DATA APDU script for loading into eUICC. This step is performed by the LPD when the LPD is in the Device.

Document [1] [SGP.22] assumes a profile package to be compliant with the provisions set out in document [6].

Document [6] [TCP IPP] Trusted Connectivity Alliance, eUICC Profile Package: Interoperable Format Technical Specification, Version 3.3, Mar 2023, describes details of profile elements (profile data) to be provided in a profile, and a standard format of a profile package as a collection of profile elements (profile data), which standard format is to be used for the loading and installation of an interoperable Profile Package into any compliant eUICC.

Document [4] EP23020510.6 describes a method for establishing, in a target eUICC, profile data of at least one profile, the profile data including at least a subscriber identity, such as IMSI or SUPI or NAI, and a network authentication key K, wherein the network authentication key K is generated in the target eUICC. Other profile data can be downloaded to the eUICC in a profile package and combined with the profile data, for example the authentication key K, generated in the eUICC.

SIM Provisioning architectures, particularly according to [1] SGP.22, expect an online connection between the eUICC and the SM-DP+ server or/and other external entities to be operative, and a synchronization between the eUICC and the SM-DP+ server or/and other external entities with respect to profile data of profiles implemented in the eUICC. When profile data are generated on-board of an eUICC, as in document [4] EP23020510.6, and especially in an IFPP environment according to [3] SGP.42, the eUICC can be offline from external entities like an SM-DP+ server, and lacking synchronization between the eUICC and the SM-DP+ or/and other external entities can occur, as well as further problems.

Document [5] ETSI TS 123 003 V17.10.0 (2023-07), ts_123003v171000p, Digital cellular telecommunications system (Phase 2+) (GSM); Universal Mobile Telecommunications System (UMTS); LTE; 5G; Numbering, addressing and identification (3GPP TS 23.003 version 17.10.0 Release 17) describes profile data, particularly profile data used for identification, and required to be unique, like IMSI, SUPI, SUCI, IMEI.

### Objective of the invention

It is an object of the present invention to provide a reliable and robust method of profile provisioning to an eUICC, which implies on-board generation, within the eUICC, of at least some of the profile data of a profile installed or to be installed in the eUICC.

### Summary of the invention

The object of the invention is achieved by a method with following features, according to claim 1. Embodiments of the invention are presented in dependent claims.

In greater detail, the object of the invention is achieved by a method of establishing, in an eUICC, profile data of at least one profile, the profile data including at least a subscriber identity (such as IMSI, SUPI or NAI) and an authentication key K. The method comprises: a) generate, in the eUICC, at least some of the profile data, referred to as on-board generated profile data; b) establish in the eUICC a profile comprising the on-board generated profile data.

The method is characterized by the steps:
c) transfer, all or part of, the on-board generated profile data to a verifier entity;
d) at the verifier entity, based on the transferred on-board generated profile data and verification criteria and verification information, generate a verification result, which represents either successful verification or non-successful verification of the on-board generated profile data, and send the verification result from the verifier entity to a state manager entity;
e) by the state manager entity, provide an operative state of the profile in the eUICC only under a condition that the verification result represents a successful verification of the on-board generated profile data, and under a condition that the verification result represents a non-successful verification of the on-board generated profile data, prevent an operative state of the profile in the eUICC.

The invention has the following advantages.

Since an operative state of the profile in the eUICC is provided only under a condition of successful verification of the on-board generated profile data based on verification criteria and verification information, at the verifier entity, it is ensured that the on-board generated profile data fulfil requirements corresponding to the verification criteria.

The verifier entity has access to the verification criteria and the verification information required for the verification.

For example, an offline eUICC in a closed IFPP environment, on the contrary, may not have access to the verification criteria and/or verification information. For example, an on-board generated IMSI or other element of profile data, such as described in [5] ETSI TS 123 003 or [6] TCA IPP, may be required to be unique. When such an element of profile data is generated in an eUICC while the eUICC is offline in a closed IFPP environment, then the offline eUICC may not have access to verification information which IMSIs are already distributed and/or enabled in a profile of an eUICC which is in the field, and if the just generated IMSI is unique (verification criteria uniqueness). The verifier, however, has access to the verification criteria, for example uniqueness of the on-board generated IMSI, as compared to IMSIs in eUICCs that are already in the field, and verification information, e.g. a listing of all relevant active IMSIs.

The access of the verifier to the required verification criteria and/or verification information may be achieved in that the transferring of the on-board generated profile data is performed as exporting the on-board generated profile data from the eUICC to an external verifier entity, which is external to the eUICC, and which has access to the required verification criteria and/or verification information.

Alternatively, the required access to verification criteria and/or verification information may be achieved in that the verification criteria and/or verification information are transferred into the eUICC, such that the verification can be performed in the eUICC.

The verification of the on-board generated profile data by the verifier entity prevents that a profile is set into operation and subsequently is non-compliant with operation requirements and therefore malfunctions and needs error management.

Accordingly, the inventive verification of the on-board generated profile data by the verifier entity increases the reliability and robustness of the profile establishment.

Accordingly, the invention provides a reliable and robust method of profile provisioning to an eUICC, which implies on-board generation, within the eUICC, of at least some of the profile data of a profile installed or to be installed in the eUICC.

In addition, the verifier entity may have capabilities to check the on-board generated profile data for errors, with the on-board generated profile data having to be free from errors being an additional verification criteria, and descriptions of known possibly error being additional verification information.

According to various embodiments, the verifier entity is, or is comprised in, one of the following entities:
- an SM-DP+ or SM-DPf server;
- an IFPP production machine;
- an EUM;
- a verifier server;
- a verifier server connected to an SM-DP+ or SM-DPf server or IFPP production machine;
- an elM;
- the eUICC.

Herein, the verifier entities with the exception of the eUICC are external verifier entities to which the on-board generated profile data are exported for the purpose of verifying the on-board generated profile data.

According to various embodiments, the state manager entity is or is comprised in one of the following entities:
- an SM-DP+ or SM-DPf server;
- an elM;
- the eUICC.

In some embodiments, the verifier entity and the state manager entity are provided in one and the same external entity which is external to the eUICC, such as in an SM-DP+ or SM-DPf or elM. In such embodiments, the verifier entity, such as an SM-DP+ or SM-DPf or elM, generates a verification result and itself initiates or prevents an operative state of the profile with the on-board generated profile data, for example by enabling the profile in case of successful verification, or by not enabling or disabling the profile in case of non-successful verification.

In some embodiments, the verifier entity and the state manager entity may be provided in different external entities. In such embodiments, the verifier entity generates a verification result and provides it to the state manager entity, and the state manager initiates (provides) or prevents an operative state of the profile with the on-board generated profile data, for example by enabling the profile in case of successful verification, or by not enabling or disabling the profile in case of non-successful verification.

Especially, the verifier entity and the state manager entity may be provided in different external entities having different levels of confidentiality and differently elaborate data protection mechanisms. In some embodiments, the verifier entity has a higher elaborate data protection mechanisms than the state manager entity.

Particularly, the verifier entity requires access to verification information which may be confidential and may be desired to be present only on selected entities, such as an entity operated by an owner of the verification information, or operated by a party in which the owner trusts. Also, the verifier entity may have to fulfil strict confidentiality requirements, and thus may be required to have highly elaborate data protection mechanisms. On the contrary, it may be desired that the eUICC and any external entity which is managed by a party different from an owner of the verification information, and which is also not trusted by the owner, shall have no access to the verification information. Ich such a case, the verifier entity is preferably provided in an external entity managed or trusted by an owner of the verification information (or/and verification criteria). The state manager entity, which is not required to have access to the verification information (or/and verification criteria, and only requires to provide of the verification result, which is either successful or non-successful, may be in a different external entity than the verifier entity, or in the eUICC, for which fulfilment of less strict confidentiality requirements may be sufficient, such that less elaborate data protection mechanisms may be sufficient.

According to some embodiments, the on-board generated profile data comprise at least one unique data item associated to the profile, and wherein:
step c) comprises to transfer the at least one unique identifier associated to the profile to the verifier entity; step d) comprises to verify uniqueness of the transferred at least one unique identifier associated to the profile; and
in step e) successful verification comprises that uniqueness of the on-board generated at least one unique identifier associated to the profile is confirmed, and non-successful verification comprises that uniqueness of the on-board generated at least one unique identifier associated to the profile is not confirmed, for example is denied, or confirmation fails for some reason.

According to some embodiments, the on-board generated profile data, which are or comprise a unique data item associated to the profile, comprise one or several of the following:
- an International Mobile Subscriber Identity, IMSI;
- a Subscriber Permanent Identifier, SUPI;
- a Network Access Identifier, NAI;
- an eUICC identifier, EID;
- a profile number, Integrated Circuit Card Identifier, ICCID;
- a network authentication key K;
- a set of OTA keys for the eUICC;
- a set of Secure Channel keys for the eUICC.

According to some embodiments, step c), transfer the on-board generated profile data, is performed:
- either directly from the origin of generation in the eUICC to the verifier entity;
- or indirectly from the origin of generation in the eUICC to the verifier entity over one or several other external entities, wherein the other external entities comprise one or several of:
   - an SM-DP+ server, in case the verifier entity is not the SM-DP+ server;
   - an IFPP production machine hosting the target eUICC, in case the verifier entity is not the IFPP production machine;
   - an SM-DPf server located outside the IFPP production environment, in case the verifier entity is not the SM-Df server;
   - an Operator server or EUM, in case the verifier entity is not the EUM;
   - an elM, in case the verifier entity is not the elM.

According to some embodiments, before step a), generate said on-board generated profile data on-board, is executed, the eUICC contains installed profile data of the profile, preferably with the exception of the on-board generated profile data.

According to some embodiments, after step a), generate said on-board generated profile data on-board, is executed, the eUICC is provided with installed profile data of the profile, preferably with the exception of the on-board generated profile data.

In any of the two above cases, at some time an installed profile is established which includes both the on-board generated profile data and the profile data received from an entity external to the eUICC (step b)).

According to some embodiments, the method further comprises the steps:
before or after step a), 0-1) receive at the eUICC a profile package, particularly in form of a Bound Profile Package BBP, including profile data of the profile, preferably with the exception of the on-board generated profile data, and 0-2) install the profile data from the received profile package in the eUICC.

According to some embodiments, step 0-2), installation of the received profile data may be effected immediately after receipt of the profile package.

Alternatively, step 0-2) install received profile data, may be effected as installing the entire profile, only after step e), after the verification of the on-board generated profile data OP, and only under the condition of successful verification of the on-board generated profile data OP.

According to some embodiments, step c), transfer the on-board generated profile data, is performed as: transfer the on-board generated profile data in or together with a profile installation result notification, such as a PIR notification according to [1] SGP.22 or [3] SGP.42. Such embodiments employ the advantage that, after profile installation in the eUICC, sending the profile installation result notification is an established interoperable mechanism.

In such embodiments, the established interoperable mechanism of the sending of the profile installation result notification, which normally only sends the profile installation result, is in addition used for the additional task of transferring the on-board generated profile data to the verifier entity for the required verification. This has the advantage that no separate transfer mechanism is required to be defined and established. Accordingly, the method to transfer the on-board generated profile data to the verifier entity in a profile result notification is particularly efficient.

According to some embodiments, step c), transfer the on-board generated profile data, is performed as: transfer the on-board generated profile data in or with an installation result notification, wherein:
- said installation result notification is related to the installation of profile data from a received profile package;
- said installation result notification is sent after step a), generate, in the eUICC, said on-board generated profile data;
- said installation result notification contains or is accompanied by said on-board generated profile data.

According to some embodiments, the mechanism of sending the on-board generated profile data to the verifier entity in a profile result notification is combined with installation of profile data from a received profile package, herein preferably installing profile data with the exception of the on-board generated profile data.

According to such embodiments, following steps are performed:
0-1) receive at the eUICC a profile package including profile data of the profile, preferably with the exception of generated or still to be generated on-board generated profile data, and
0-2) install the profile data from the received profile package in the eUICC;
0-3) generate a profile installation result (PIR) notification for the installed profile data installed in step 0-2);
either before or after step 0-2), perform step a) generate, in the eUICC, at least some of the profile data, referred to as on-board generated profile data, and also install the on-board generated profile data;
b) establish in the eUICC a profile comprising the on-board generated profile data and the received profile data from the received profile package; herein, part of establishing the profile is achieved already by installing the received profile data, and part of establishing the profile is achieved by adding the on-board generated profile data to the profile;
c) transfer the on-board generated profile data to the verifier entity in or with said profile installation result notification (PIR) generated in step 0-3).

In addition, steps d) and e) are performed.

According to some embodiments,
step b) to establish in the eUICC the profile comprising the on-board generated profile data comprises to (0-2) install the profile, including the on-board generated profile data and where applicable profile data received in a profile package;
and step e) to provide an operative state of the profile in the eUICC, in combination of step b) and e), comprise either one of the following:
   (i) (0-2) install or/and enable the profile only under a condition of successful verification of the on-board generated profile data at the verifier entity, and under a condition of non-successful verification of the on-board generated profile data at the verifier entity (VER) at least do not enable the profile; or
   (ii) (0-2) install or/and enable the profile, and maintain the enabled state of the profile only under a condition of successful verification of the on-board generated profile data at the verifier entity, and under a condition of non-successful verification of the on-board generated profile data at the verifier entity disable the profile.

According to some embodiments, the profile data are always installed, and depending on the result of the verification of the on-board generated profile data, an enabled or disabled state of the installed profile is established.

According to some embodiments, also the installation of at least some of the profile data is performed only depending on the result of the verification of the on-board generated profile data.

According to some embodiments, profile data from a received profile package are always installed, and on-board generated profile data are installed only depending on the result of the verification of the on-board generated profile data.

According to some embodiments, the method further comprises, under a condition of non-successful verification of the on-board generated profile data at the verifier entity, to delete the profile.

According to some embodiments, step d) further comprises, at the verifier entity, to verify one or several of the following properties of the on-board generated profile data:
- errors, particularly format errors, particularly faulty length or/and format;
- origin of the on-board generated profile data from an admitted eUICC;
- authenticity of the on-board generated profile data;
- integrity of the on-board generated profile data.

According to some embodiments, the transferred on-board generated profile data are transferred in an encrypted form, encrypted with an encrypt key, and decrypted at the verifier entity with a corresponding decrypt key. The encryption and decryption may be either symmetric or asymmetric.

An eUICC according to the present invention is constructed to perform a method for establishing, in said eUICC, at least one profile, the profile comprising profile data including at least a subscriber identity, such as IMSI; SUPI; NAI, and a network authentication key K. The method comprises:
a) generate, in the eUICC, at least some of the profile data, referred to as on-board generated profile data;
b) establish in the eUICC a profile comprising the on-board generated profile data; **and is characterized by:**
c) transfer, all or part of, the on-board generated profile data from the eUICC to a verifier entity;
d) by the transfer, initiate the verifier entity, based on the transferred on-board generated profile data and verification criteria, to generate a verification result, which represents either successful verification or non-successful verification of the on-board generated profile data, and send the verification result from the verifier entity to a state manager entity;
e) receive, from the state manager entity, instructions so as to provide an operative state of the profile in the eUICC only under a condition that the verification result represents a successful verification of the on-board generated profile data at the, and under a condition that the verification result represents a non-successful verification of the on-board generated profile data at the, prevent an operative state of the profile in the eUICC.

A verifier entity according to the present invention is constructed to perform a method for establishing, in an eUICC, at least one profile, the profile comprising profile data including at least a subscriber identity, such as IMSI; SUPI; NAI, and a network authentication key K. The method comprises, after steps at the eUICC, a) generate, in the eUICC, at least some of the profile data, referred to as on-board generated profile data; and b) establish in the eUICC a profile comprising the on-board generated profile data;
to perform steps at the verifier entity which are **characterized by:**
c) receive at the verifier entity, from the eUICC, all or part of, the on-board generated profile data;
d) at the verifier entity, based on the transferred on-board generated profile data and verification criteria, generate a verification result, which represents either successful verification or non-successful verification of the on-board generated profile data, and send the verification result from the verifier entity to a state manager entity;
e) initiate the state manager to provide an operative state of the profile in the eUICC only under a condition that the verification result represents a successful verification of the on-board generated profile data, and under a condition that the verification result represents a non-successful verification of the on-board generated profile data at the, prevent an operative state of the profile in the eUICC.

### Brief description of the drawings

Embodiments of the invention will now be described with reference to the accompanying drawings, throughout which like parts are referred to by like references, and in which represents:
- Fig. 1: an IFPP Functional Architecture for Consumer and IoT Devices, as depicted in Figure 1 of [2] [SGP.41];
- Fig. 2: an IFPP procedure as depicted in Fig. 6 of [2] [SGP.41] depicting entities internal and external to an IFPP production environment, suitable for the invention;
- Fig. 3: the IFPP of Fig. 1, with several alternative options for a verifier entity, according to embodiments of the invention;
- Fig. 4: Figure 1 from [1] [SGP.22], with several alternative options for a verifier entity, according to embodiments of the invention;
- Fig. 5: a method for establishing, in an eUICC, a profile with on-board generated profile data, according to embodiments of the invention.

### Detailed description of the invention

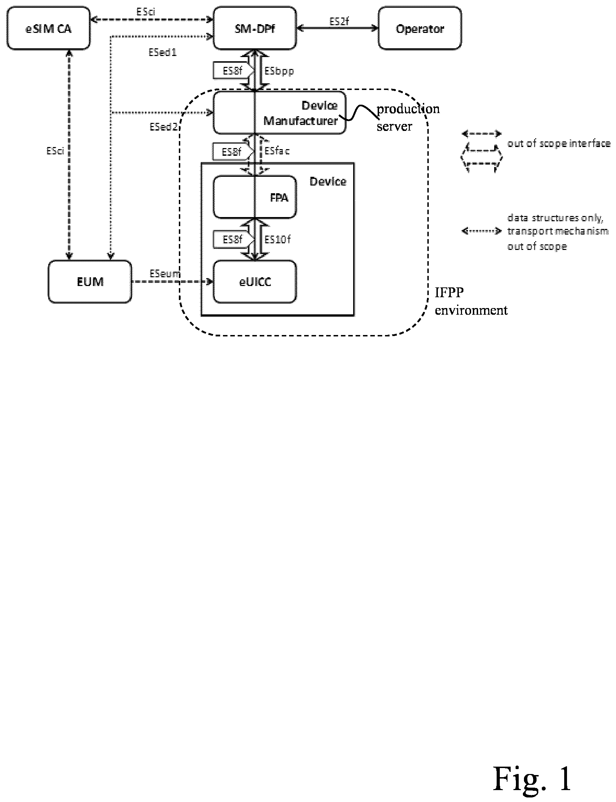

Fig. 1 shows an IFPP Functional Architecture for Consumer and IoT Devices, as depicted in Figure 1 of [2] [SGP.41]. For profile download in an IFPP environment, a device manufacturer production server and the eUICC are located in the closed IFPP environment, which is a secured closed production environment. In Fig. 1, the limits of the IFPP environment (closed environment) are shown by a dashed line. The eUICC may be hosted in its target device, as shown in Fig. 1, or in an eUICC reader of the device manufacturer production server (the latter variant not being shown in Fig. 1). Other entities like SM-DPf profile sever, Operator (MNO server) and EUM are located outside the IFPP environment. Dashed lines from entities outside the IFPP environment, like EUM or SM-DPf, to the eUICC or device manufacturer production server depict data transfer at a status when the IFFP environment is not closed, however opened with online connections to external entities, wherein in the opened status no profile download is executed.

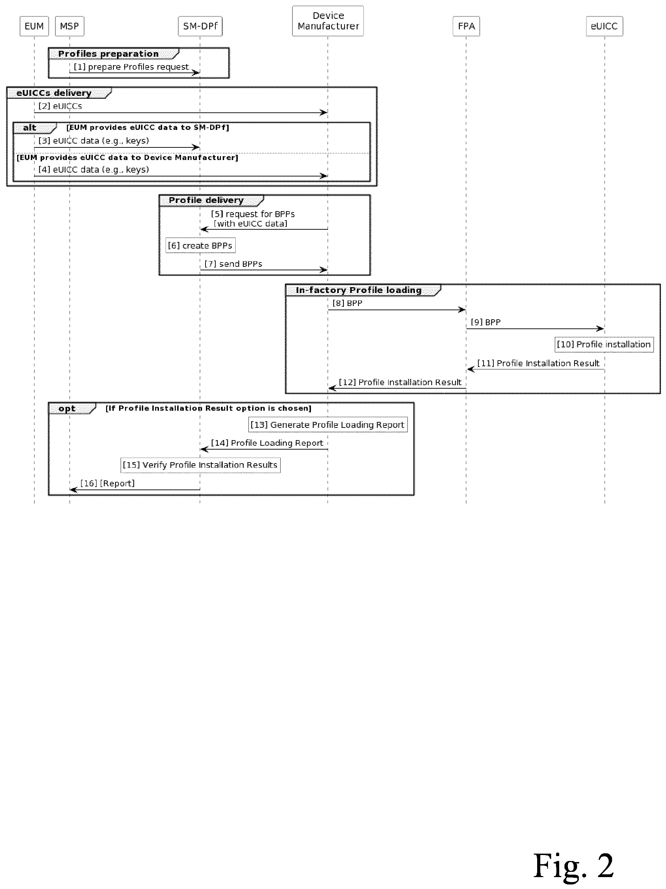

Fig. 2 shows the IFPP procedure as depicted in Fig. 6 of [2] [SGP.41]. The sub-procedure profiles preparation comprises following. Step [1]: the MSP sends to the SM-DPf a prepare Profile request. The sub-procedure eUICC delivery comprises following. Step [2]: eUICCs are delivered from the EUM to the device manufacturer at the location of which the IFPP production environment is installed and can be operated. Step [3]: The EUM provides eUICC data, particularly OT public keys, to the SM-DPf. Step [4]: The EUM provides eUICC data, particularly OT public keys, to the device manufacturer. The sub-procedure profile delivery comprises following. Step [5] the device manufacturer requests from the SM-DPf Bound Profile Packages, BPPs, herein indicating the eUICC data. Step [6]: The SM-DPf creates Bound Profile Packages, BPPs. Step [7]: the SM-DPf sends the created Bound Profile Packages, BPPs, to the device manufacturer. The sub-procedure In-factory profile loading comprises following. Step [8]: the device manufacturer production server loads a Bound Profile Package, BPP, to a Factory Profile Assistant FPA (similar to an LPA as in SGP.22) connected to an eUICC. Step [9]: the FPA sends the Profile Package, BPP, to the eUICC. Step [10]: the eUICC unwraps the Bound Profile Package, BPP, extracts the profile and installs the profile into the eUICC. Step [11]. The eUICC sends to the FPA a Profile Installation Result notification, also referred to as PIR notification. Step [12]: the FPA forwards the Profile Installation Result notification, PIR notification, to the device manufacturer production server.

The SM-DPf and/or the MSP and/or the EUM can be provided with a Report about a Result of the Profile Loading and Installation. The corresponding optional sub-procedure Profile Installation Result PIR comprises following. Step [13]: the device manufacturer production server generates a Profile Loading and/or Installation Report. Step [14]: the device manufacturer sends the Profile Loading and/or Installation Report to the SM-DPf, which receives said report. Step [15]: based on the Profile Loading and/or Installation Report, the SM-DPf, verifies the Profile Installation Result. Step [16]: The SM-DPf sends to the MSP or/and EUM a Report about the Profile Installation Result.

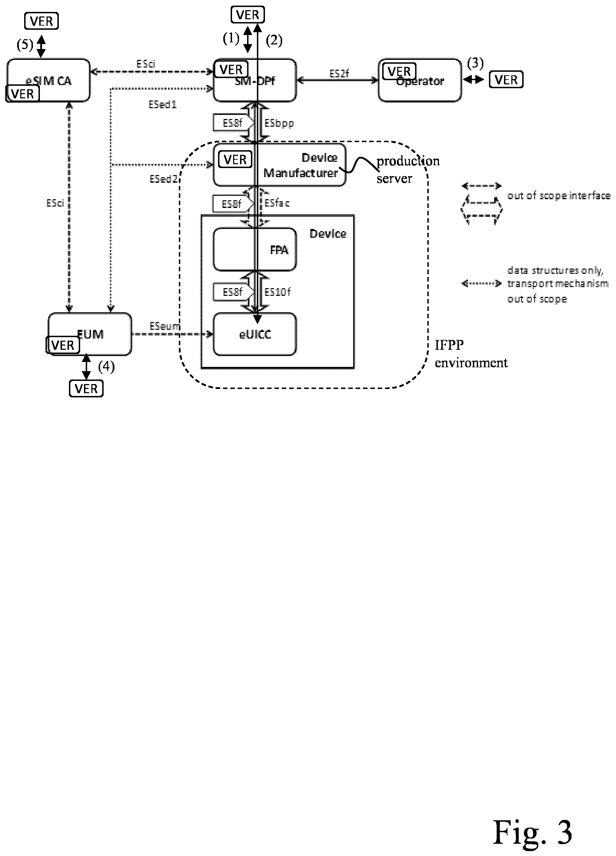

Fig. 3 shows the IFPP of Fig. 1, with several alternative options for a verifier entity VER, according to embodiments of the invention. The verifier entity VER may be provided as a separate entity having one or several of the following communication capacities: (1) over a communication channel, which may be secured, directly with the SM-DPf; (2) over a communication channel, which may be end-to-end secured, with the eUICC, and physically through the device hosting the eUICC and the device manufacturer production server, particularly over the ES8f channel; (3) over a communication channel, which may be secured, directly with the Operator; (4) over a communication channel, which may be secured, directly with the EUM; (5) over a communication channel, which may be secured, directly with the eSIM CA. The verifier entity VER may be provided as an incorporated entity incorporated into one of the following entities: The SM-SDf, the device manufacturer production server, the Operator server, the EUM, the eSIM CA.

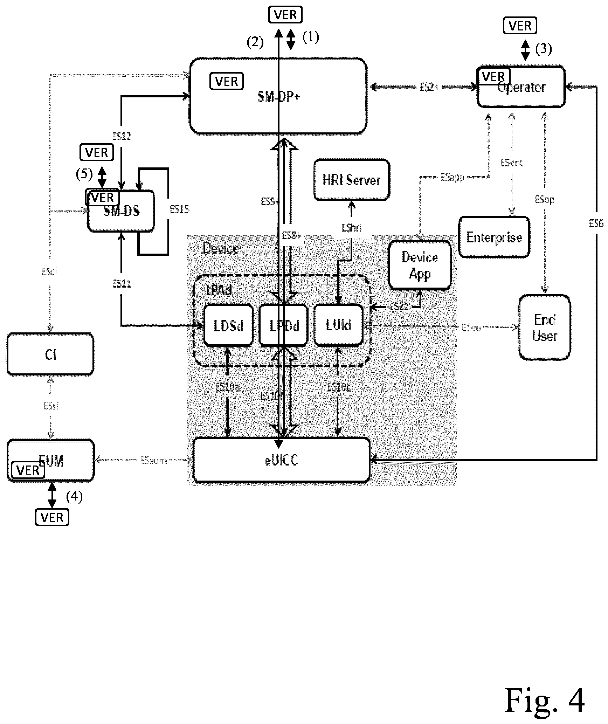

Fig. 4 shows Figure 1 from [1] [SGP.22], with several alternative options for a verifier entity, according to embodiments of the invention. The verifier entity VER may be provided as a separate entity having one or several of the following communication capacities: (1) over a communication channel, which may be secured, directly with the SM-DP+; (2) over a communication channel, which may be end-to-end secured, with the eUICC, and physically through the device hosting the eUICC and the device manufacturer production server, particularly over the ES8+ channel; (3) over a communication channel, which may be secured, directly with the Operator; (4) over a communication channel, which may be secured, directly with the EUM; (5) over a communication channel, which may be secured, directly with the SM-DS. The verifier entity VER may be provided as an incorporated entity incorporated into one of the following entities: The SM-SD, the Operator server, the EUM, the SM-DS.

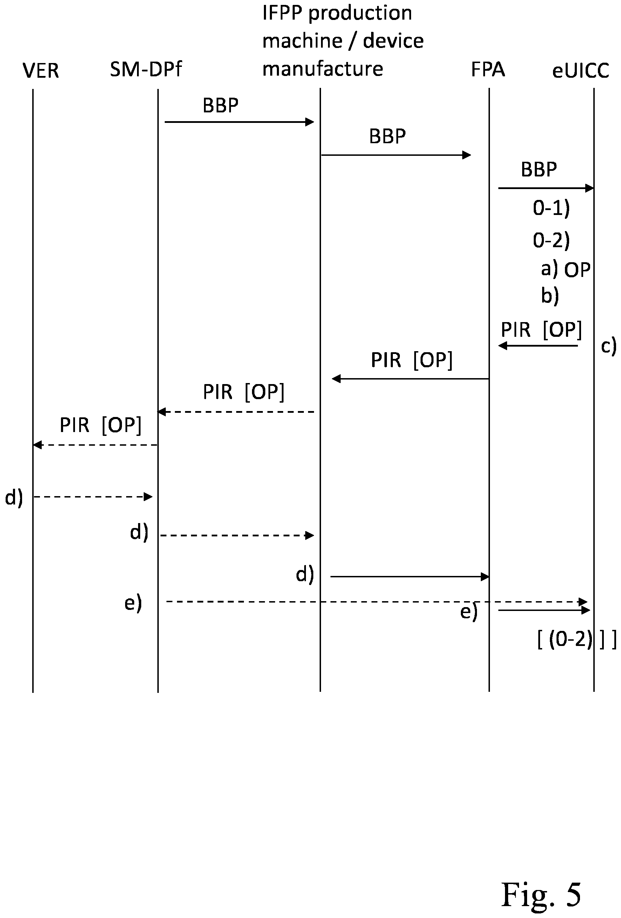

Fig. 5 shows a method for establishing, in an eUICC, a profile with on-board generated profile data OP, according to embodiments of the invention. The SM-DPf sends a Bound Profile Package BBP to the IFPP production machine of a device manufacturer, which forwards or sends the Bound Profile Package BBP to the In-Factory provisioning Agent FPA (corresponding functionally to LPA of SGP.22 or IPA of SGP.32). The In-Factory provisioning Agent FPA sends or forwards the Bound Profile Package BBP to the eUICC. Typically, a batch of several or several thousand Bound Profile Packages BBPs is sent from the SM-DPf, from there to the IFPP production machine of a device manufacturer. One single Bound Profile Package BBP destined for an eUICC, or a small number of such destined Bound Profile Packages BBPs, out of the batch of Bound Profile Packages BBPs is sent to the In-Factory provisioning Agent FPA and further to the eUICC.

Next, the following steps are executed.
Step a) generate, in the eUICC, at least some of the profile data, referred to as on-board generated profile data OP;
Step b) establish in the eUICC a profile comprising the on-board generated profile data OP; details of this step will be set out further below;
Step c) export, all or part of, the on-board generated profile data OP from the eUICC to a verifier entity VER; details of this step will be set out further below;
Step d) receive, from the verifier entity VER, a result of a verification of the exported on-board generated profile data OP, which represents either successful verification or non-successful verification of the exported on-board generated profile data OP;
e) provide an operative state of the profile in the eUICC only under a condition of successful verification of the on-board generated profile data OP at the verifier entity VER, and under a condition of non-successful verification of the on-board generated profile data OP at the verifier entity VER, prevent an operative state of the profile in the eUICC.

In the embodiment of Fig. 5, the verifier entity is embodied as a separate entity having communication capacities: (1) over a communication channel, which may be secured, directly with the SM-DPf, according to embodiment (1) depicted in Fig. 3. Accordingly, step d) implies a communication chain from the verifier entity VER to the SM-DPf, further from the SM-DPf to the IFPP production machine, and further from the IFPP production machine to the FPA.

Step e) may imply enabling the profile remotely by the SM-DPf or locally by the FPA, or disabling the profile remotely by the SM-DPf or locally by the FPA.

Before, or alternatively after, step a), following steps may be performed.

Step 0-1) receive, from the FPA, at the eUICC the sent Bound Profile Packages BBPs. The Bound Profile Packages BBPs includes profile data of the profile, preferably with the exception of the on-board generated profile data OP that will still be generated.

Step 0-2) install the profile data from the received profile package in the eUICC to establish part of the established profile of step b).

Step 0-2), installation of the received profile data may be effected immediately after receipt of the BBP.

Alternatively, step 0-2) install received profile data, may be effected as installing the entire profile, only after step e), after the verification of the on-board generated profile data OP, and only under the condition of successful verification of the on-board generated profile data OP, as depicted in Fig. 5 by indication [(0-2)] after step e).

### Cited documents

[1] [SGP.22] GSMA SGP.22 RSP Technical Specification Version 3.0, 19th October 2022
[2] [SGP.41] GSMA SGP.41 eSIM IFPP Architecture and Requirements Version 1.0 Draft 17
[3] [SGP.42] GSMA SGP.42 eSIM IFPP Technical Specification (to be finalized and unpublished at the date of filing the application)
[4] EP23020510.6 (unpublished)
[5] ETSI TS 123 003 V17.10.0 (2023-07), ts_123003v171000p, Digital cellular telecommunications system (Phase 2+) (GSM); Universal Mobile Telecommunications System (UMTS); LTE; 5G; Numbering, addressing and identification (3GPP TS 23.003 version 17.10.0 Release 17);
[6] [TCP IPP] Trusted Connectivity Alliance, eUICC Profile Package: Interoperable Format Technical Specification, Version 3.3, Mar 2023.

## Claims

1. A method of establishing, in an eUICC, at least one profile, the profile comprising profile data including at least a subscriber identity (IMSI; SUPI; NAI) and a network authentication key K, comprising:
a) generate, in the eUICC, at least some of the profile data, referred to as on-board generated profile data (OP);
b) establish in the eUICC a profile comprising the on-board generated profile data (OP);
**the method characterized by the steps:**
c) transfer, all or part of, the on-board generated profile data (OP) to a verifier entity (VER);
d) at the verifier entity (VER), based on the transferred on-board generated profile data (OP) and verification criteria and verification information, generate a verification result, which represents either successful verification or non-successful verification of the on-board generated profile data (OP), and send the verification result from the verifier entity (VER) to a state manager entity;
e) by the state manager entity, provide an operative state of the profile in the eUICC only under a condition that the verification result represents a successful verification of the on-board generated profile data (OP), and under a condition that the verification result represents a non-successful verification of the on-board generated profile data (OP), prevent an operative state of the profile in the eUICC.

2. The method according to claim 1, wherein the verifier entity (VER) is or is comprised in one of the following entities:
- an SM-DP+ or SM-DPf server;
- an IFPP production machine;
- an EUM;
- a verifier server;
- a verifier server connected to an SM-DP+ or SM-DPf server or IFPP production machine;
- an elM;
- the eUICC;
or/and the state manager entity is or is comprised in one of the following entities:
- an SM-DP+ or SM-DPf server;
- an elM;
- the eUICC.

3. The method according to claim 1 or 2, wherein the on-board generated profile data (OP) comprise at least one unique data item associated to the profile, and wherein:
step c) comprises to transfer the at least one unique identifier associated to the profile;
step d) comprises to verify uniqueness of the transferred at least one unique identifier associated to the profile; and
in step e) successful verification comprises that uniqueness of the on-board generated at least one unique identifier associated to the profile is confirmed.

4. The method according to claim 3, wherein the on-board generated profile data (OP), which are a unique data item associated to the profile, comprise one or several of the following:
- an International Mobile Subscriber Identity, IMSI;
- a Subscriber Permanent Identifier, SUPI;
- a Network Access Identifier, NAI;
- an eUICC identifier, EID;
- a profile number, Integrated Circuit Card Identifier, ICCID;
- a network authentication key K;
- a set of OTA keys;
- a set of Secure Channel keys.

5. The method according to any of claims 1 to 4, wherein step c), transfer the on-board generated profile data (OP), is performed:
- either directly from the eUICC to the verifier entity (VER);
- or indirectly from the eUICC to the verifier entity (VER) over one or several other external entities, wherein the other external entities comprise one or several of:
- an SM-DP+ server, in case the verifier entity (VER) is not the SM-DP+ server;
- an IFPP production machine hosting the target eUICC, in case the verifier entity (VER) is not the IFPP production machine;
- an SM-DPf server located outside the IFPP production environment, in case the verifier entity (VER) is not the SM-Df server;
- an Operator server or EUM, in case the verifier entity (VER) is not the EUM;
- an elM, in case the verifier entity is not the elM.

6. The method according to any of claims 1 to 5, wherein, before step a) is executed, the eUICC contains installed profile data of the profile, preferably with the exception of the on-board generated profile data (OP); or after step a) is executed, the eUICC is provided with to be installed profile data of the profile, preferably with the exception of the on-board generated profile data (OP).

7. The method according to any of claims 1 to 6, further comprising the steps:
before or after step a), 0-1) receive at the eUICC a profile package (BBP) including profile data of the profile, preferably with the exception of the on-board generated profile data (OP), and 0-2) install the profile data from the received profile package in the eUICC.

8. The method according to any of claims 1 to 7, wherein step c), transfer the on-board generated profile data (OP), is performed as: transfer the on-board generated profile data (OP) in or with an installation result notification (PIR).

9. The method according to claim 7, wherein step c), transfer the on-board generated profile data (OP), is performed as: transfer the on-board generated profile data (OP) in or with an installation result notification (PIR), wherein:
- said installation result notification (PIR) is related to the installation of the profile data from the received profile package (BBP);
- said installation result notification (PIR) is sent after step a), generate, in the eUICC, said on-board generated profile data (OP);
- said installation result notification (PIR) contains or is accompanied by said on-board generated profile data (OP).

10. The method according to any of claims 1 to 9, wherein
step b) to establish in the eUICC the profile comprising the on-board generated profile data (OP) comprises to (0-2) install the profile;
and step e) to provide an operative state of the profile in the eUICC, in combination of step b) and e), comprise either one of the following:
(i) (0-2) install or/and enable the profile only under a condition of successful verification of the on-board generated profile data (OP) at the verifier entity (VER), and under a condition of non-successful verification of the on-board generated profile data (OP) at the verifier entity (VER) at least do not enable the profile; or
(ii) (0-2) install or/and enable the profile, and maintain the enabled state of the profile only under a condition of successful verification of the on-board generated profile data (OP) at the verifier entity (VER), and under a condition of non-successful verification of the on-board generated profile data (OP) at the verifier entity (VER) disable the profile.

11. The method according to any of claims 1 to 10, further comprising, under a condition of non-successful verification of the on-board generated profile data (OP) at the verifier entity (VER), delete the profile.

12. The method according to any of claims 1 to 11, wherein step d) further comprises, at the verifier entity (VER), to verify one or several of the following properties of the on-board generated profile data (OP):
- errors, particularly format errors, particularly faulty length or/and faulty format;
- origin of the on-board generated profile data (OP) from an admitted eUICC;
- authenticity of the on-board generated profile data (OP);
- integrity of the on-board generated profile data (OP).

13. The method according to any of claims 1 to 12, wherein the transferred on-board generated profile data (OP) are transferred in an encrypted form, encrypted with an encrypt key, and decrypted at the verifier entity (VER) with a corresponding decrypt key.

14. An eUICC, constructed to perform a method for establishing, in said eUICC, at least one profile, the profile comprising profile data including at least a subscriber identity (IMSI; SUPI; NAI) and a network authentication key K, comprising:
a) generate, in the eUICC, at least some of the profile data, referred to as on-board generated profile data (OP);
b) establish in the eUICC a profile comprising the on-board generated profile data (OP);
**characterized by:**
c) transfer, all or part of, the on-board generated profile data (OP) to a verifier entity (VER);
d) by the transfer, initiate the verifier entity (VER), based on the transferred on-board generated profile data (OP) and verification criteria, to generate a verification result, which represents either successful verification or non-successful verification of the on-board generated profile data (OP), and send the verification result from the verifier entity (VER) to a state manager entity;
e) receive, from the state manager entity, instructions so as to provide an operative state of the profile in the eUICC only under a condition that the verification result represents a successful verification of the on-board generated profile data (OP) at the, and under a condition that the verification result represents a non-successful verification of the on-board generated profile data (OP), prevent an operative state of the profile in the eUICC.

15. A verifier entity (VER), constructed to perform a method for establishing, in an eUICC, at least one profile, the profile comprising profile data including at least a subscriber identity (IMSI; SUPI; NAI) and a network authentication key K, comprising:
after a step at the eUICC, a) generate, in the eUICC, at least some of the profile data, referred to as on-board generated profile data (OP); and
after a step at the eUICC, b) establish in the eUICC a profile comprising the on-board generated profile data (OP);
perform steps **characterized by:**
c) receive at the verifier entity (VER), from the eUICC, all or part of, the on-board generated profile data (OP);
d) at the verifier entity (VER), based on the transferred on-board generated profile data (OP) and verification criteria, generate a verification result, which represents either successful verification or non-successful verification of the on-board generated profile data (OP), and send the verification result from the verifier entity (VER) to a state manager entity;
e) initiate the state manager to provide an operative state of the profile in the eUICC only under a condition that the verification result represents a successful verification of the on-board generated profile data (OP), and under a condition that the verification result represents a non-successful verification of the on-board generated profile data (OP), prevent an operative state of the profile in the eUICC.
